Europäisches Patentamt

European Patent Office

Office européen des brevets

(11) Publication number: **0 148 411**
A1

(12) # EUROPEAN PATENT APPLICATION

(21) Application number: **84114731.7**

(22) Date of filing: **04.12.84**

(51) Int. Cl.⁴: **H 04 B 15/02**

(30) Priority: **15.12.83 IT 4573583**

(43) Date of publication of application: **17.07.85**
**Bulletin 85/29**

(84) Designated Contracting States: **AT BE CH DE FR GB IT LI LU NL SE**

(71) Applicant: **INDUSTRIE ZANUSSI S.p.A., Via Giardini Cattaneo 3, I-33170 Pordenone (IT)**

(72) Inventor: **Nodassi, Francesco, via Cavour 8, I-33080 Porcia Pordenone (IT)**
Inventor: **Trangoni, Mario, via Pedron 1, I-33170 Pordenone (IT)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

(54) Household laundry appliance having a commutable electric motor.

(57) A household laundry appliance is provided with at least one commutable electric motor adapted to be connected between the phases (8, 9) of the electric supply circuit by means of commutator elements actuated at relatively low frequencies and/or higher frequencies with respect to the operating cycles of the appliance. At least one commutator element (10) operating at a relatively high frequency is connected to each phase of the supply circuit through at least one part of the motor windings (5, 6, 7).

EP 0 148 411 A1

Household Laundry Appliance Having
a Commutable   Electric Motor

Description

The present invention relates to a household laundry appliance such as a laundry washing machine or a laundry drier, having at least one inductive load comprising a commutable   electric motor.

As generally known, nearly all types of electric household appliances include actuating elements constituting an inductive load, such as electric motors, solenoid valve relays and the like   adapted to be connected between the phases of the electric supply net by means of commutators adapted during the operating cycles of the respective appliance to be actuated by means of a program unit at a higher or lower frequency in accordance with the operations to be carried out by the respective appliance. These commutators, particularly those controlling the operation of electric motors, generate high-frequency interferences which are propagated along the phases of the electric supply network in a disequilibrated manner. In particular, these interferences are more intensive in the phase connected to the commutator itself and less pronounced in the phase connected to the motor, as the windings of the latter act as a rejection filter for radio frequency interferences.

As further known, the high-frequency interferences have to be kept within limits established by international standards. To this effect it is common practice to employ electric filters for suppressing the high-frequency interferences, such filters also having to take into account the above mentioned disequilibrated propagation of the interferences. These filters generally comprise capacitors and/or inductances connected in a "T" or "$\pi$" configuration, and are relatively unreliable in addition to being of complicated and expensive construction.

It is an object of the present invention to provide a household laundry appliance provided with at least one reversible electric motor adapted to be controlled by means of cyclically operating commutators, in which the generation of high-frequency interferences is minimized without the necessity of employing suitable filters, or at least without the necessity of employing filters of complicated construction.

According to the invention, this object is attained in a household laundry appliance provided with at least one inductive load comprising a single phase motor having a first, a second and a third winding section, said inductive load being adapted to be connected between the phases of the electric supply network by means of at least one commutating element operating at a relatively low frequency and at least one commutating element operating at a relatively high frequency with respect to the operating cycles of the appliance, such appliance being essentially characterized in that at least said commutating element operating at said relatively high freqeuency is connected to said phases on the one side alternatively through said second and third winding sections and on the other side through said first winding section.

As a result, at least part of the windings of a commutable electric motor provided in said household laundry appliance is utilized with respect to each phase of the electric power supply as a rejection impedance for high-frequency interferences generated by the commutating control element. This permits the shielding requirements of the electric household appliance to be considerably reduced, as the high-frequency interferences generated therein are at the same time attenuated and equilibrated.

The characteristics of the invention will become more clearly evident from the following description, given by way of a non-limiting example with reference to the accompanying drawings, wherein:

fig. 1   shows a circuit diagram of a prior art solution for controlling an electric actuating motor of an electric household appliance,

fig. 2   shows a diagram of a circuit similar to the one shown in fig. 1 as improved according to the invention, and

fig. 3   shows a circuit diagram associated with the main actuating elements of a household laundry appliance according to the invention.

In the described example, reference is made to an automatic laundry washing machine.

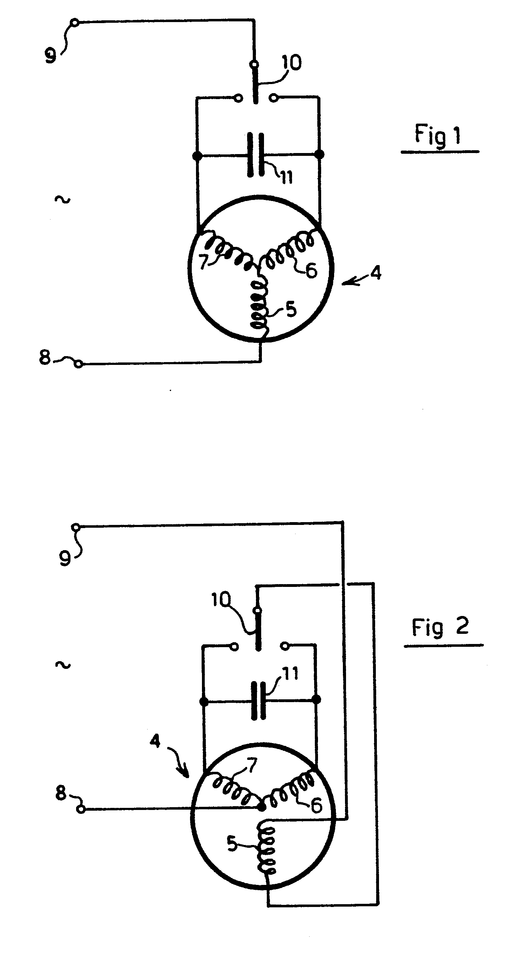

With reference to fig. 1, an electric motor 4 for rotating the washing drum (not shown) of a laundry washing machine is usually of the single-phase type having three Y-connected winding sections 5, 6 and 7.

One terminal of winding section 5 is directly connected to one phase 8 of an electric supply circuit, while respective terminals of winding sections 6 and 7 are adapted to be selectively connected to the opposite phase 9 of the electric supply circuit by means of a commutator 10. Additionally connected between said terminals of winding sections 6 and 7 is a fixed start-up capcitor 11. Commutator 10 ins controlled by a program unit (not shown) of the appliance for repeatedly switching between its two operative positions during each operating cycle of the machine so that motor 4 rotates alternately in opposite directions for driving the washing drum in respective directions.

As generally known, the cyclic operation of commutator 10 at a relatively high frequency results in the generation of radio frequency interferences propagating along the supply circuit in a disequilibrated manner. In particular, these interferences propagate mainly in the direction of phase 9, and to a considerably attenuated measure in the direction of phase 8 due to the presence of the rejection impedance constituted alternatively be winding sections 5, 6 and 5, 7.

As already stated, these interferences have to be attentuated by the otherwise undesirable employ of electric filters selected for this purpose. Analogous considerations, although to a varying degree according to the intensity of the described phenomenon, apply to the case in which motor 4 is replaced by a different inductive load, for instance by a relay for actuating a solenoid valve or by a motor for driving a pump.

With reference to fig. 2 it is noted that according to the invention commutator 10 is symmetrically connected to each phase 8, 9 of the supply circuit through respective sections of the winding of motor 4. In particular, phase 8 is directly connected to the connection point of winding sections 6, 7, while commutator 10 is connected to phase 9 through winding section 5 of motor 4. Winding section 5 is not electrically connected to winding sections 6 and 7 while still cooperating therewith to form an electromagnetic circuit equivalent to the one shown in fig. 1. A skilled artisan is in fact readily capable of modifying motor 4 in accordance with the invention while maintaining the same phase relationships and current intensity in the winding sections, and thus the magnetic fluxes generated thereby.

It is understood that in the circuits shown in figs. 1 and 2 there is normally provided a main switch (not shown) adapted to be actuated at a relatively low frequency by comparison to commutator 10 and thus preferably shielded from winding sections 5 and 6, 7.

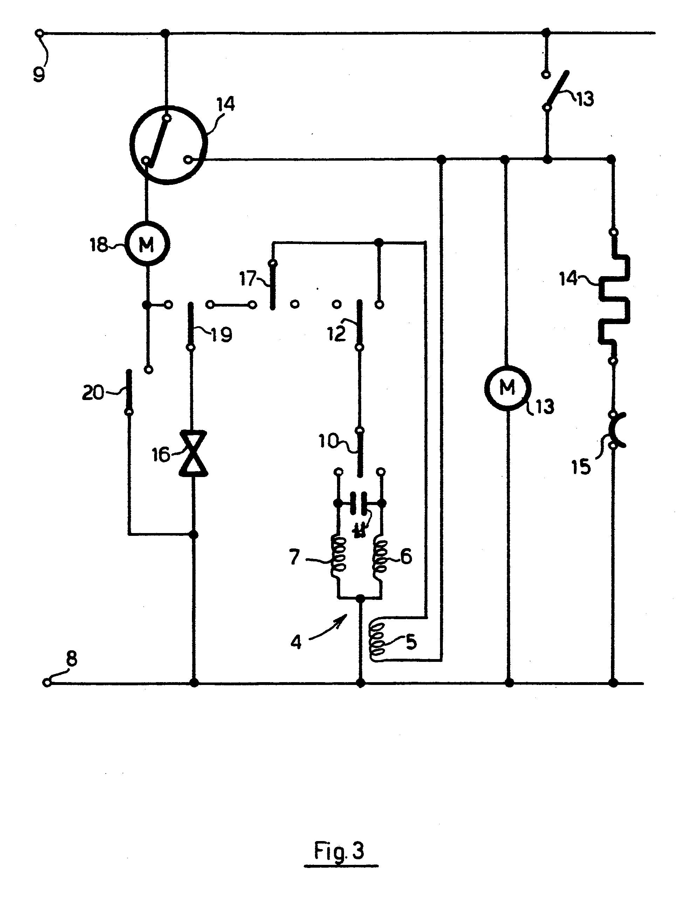

With reference to fig. 3, it is noted that in the electric household appliance according to the invention, motor 4 is adapted to be connected between the phases 8 and 9 of the supply circuit not only through commutator or reversing switch 10 (actuated at a relatively high frequency) but also through commutators 12, 13 and/or the contact of a pressostat 14, all of these elements being adapted to be commutated by the program unit at a relatively low frequency. In particular, any high frequency interferences generated by commutator 12 are also symmetrically attenuated by the winding sections 5, 6 and 7 of motor 4.

In the conventional manner, the circuit shown in fig. 3 additionally includes an electric motor 13 for driving the program unit of the elctric household appliacne, and an electric resistance heater 14 controlled by a thermostat 15 for determining the temperature of the laundering bath.

The electric household appliance is further provided with a solenoid valve for admitting water from a supply mains, one terminal of valve 16 being directly connected to phase 8, while its other terminal is adapted to be selectively connected to winding section 5 through a commutator 17 adapted to be actuated at a relatively high frequency, or to pressostat 14 through a motor 18 driving a discharge pump, depending on the operative position of a commutator 19 actuated by the program unit at a relatively low frequency.

Pump motor 18 finally is adapted to be connected to phase 8 of the supply circuit through a commutator 20 adapted to be actuated at a relatively low frequency.

The operation of the circuit shown in fig. 3 is substantially known and needs thus not be described. It is solely intended to point out that the characteristics of the present invention are applicable not only with reference to commutators 10 and 12 for controlling motor 4, but also to other commutators likely to generate high-frequency interferences.

In particular, commutator 17 when in its operative position is connected to phases 8 or 9 respectively through the coil of solenoid valve 16 and winding section 5, respectively. Analogously, commutator 19 is always shielded against phase 8 by the coil of solenoid valve 16, and against phase 9 by winding section 5 or by the winding of pump motor 18, depending on its operative position.

0148411

In summary   substantially all commutators likely to cause the generation of high-frequency interferences at the frequencies at which they are normally operated during an operating cycle of the appliance are symmetrically shielded with respect to phases 8 and 9 of the supply circuit by utilizing at least part of the inductive loads of the appliance itself as rejection impedances. The shielding effect will obviously depend on the dimensions of the respective inductive loads.

Household Laundry Appliance Having
a Commutable Electric Motor

_____

Patent Claim
_____

1. A household laundry appliance provided with at
least one inductive load comprising a single phase
motor having a first, a second and a third winding
section, said inductive load being adapted to be
connected between the phases of the electric supply
net by means of at least one commutating element
having a relatively low frequency and at least one commutating element having a relatively high frequency
with respect to the operating cycles of the appliance characterized in that at least said commutating element (10) having a relatively high frequency is connected to said phases (8, 9) on the one side alternately through said second and third winding sections (6, 7) and on the other side through said first winding section (5).

112    0148411

Fig 1

Fig 2

Fig. 3

2/2

0148411

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 530 349 (EMERSON ELECTRIC) <br> * Column 2, line 16 – column 3, line 41; figures 1, 2 * | 1 | H 04 B 15/02 |
| A | CH-A- 215 207 (ELECTROLUX) <br> * Figure 1 * | 1 | |
| A | US-A-2 724 062 (MARCHANT CALCU-LATORS) <br> * Column 3, lines 54-70; figure 3 * | 1 | |
| A | FR-A-1 292 096 (VEB ELEKTROWÄRME SÖRNEWITZ) <br> * Whole document * | 1 | **TECHNICAL FIELDS SEARCHED (Int. Cl.4)** |
| A | DE-B-1 160 530 (SIEMENS & HALSKE AG) | | H 04 B <br> H 02 K <br> H 02 P <br> B 60 L |

The present search report has been drawn up for all claims

| Place of search | Date of completion of the search | Examiner |
|---|---|---|
| THE HAGUE | 25-02-1985 | HOUILLON |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82